# EUROPEAN PATENT APPLICATION

(11) **EP 0 521 485 A2**
(43) Date of publication of application: **07.01.1993**
(21) Application number: 92111153.0
(22) Date of filing: 01.07.1992
(51) Int. Cl.: F16K 31/42, F16K 31/124

(54) **Automatic control valve with isolation device between pilot and main valve**

(30) Priority: 02.07.1991 CN 91104261
(71) Applicant: Wen, Bang Yan, 325200 Ruian, Zhejiang (CN)
(72) Inventor: Wen, Bang Yan, 325200 Ruian, Zhejiang (CN)
(74) Representative: Patentanwälte Viering, Jentschura & Partner

(57) **Abstract**

An isolation automatic control valve is formed by disposing an isolation valve of very simple structure at the inlet and outlet passages (O1,P1) of a main valve (11) or at the passage joining the main valve and its pilot valve (14), which can isolate main valve and pilot valve for on-line maintenance while in the meantime it is still possible to control action of main valve manually or automatically. The isolation valve has further a throttling function (13) to enable main valve to acquire various control parameters.

## Description

The present invention relates to an automatic control valve with an isolation valve, especially to a valve able to isolate a pilot valve and to control manually or by automatic piloting.

The present invention relates further to a pressure control valve which combines a damping throttle valve with a manual adjusting valve.

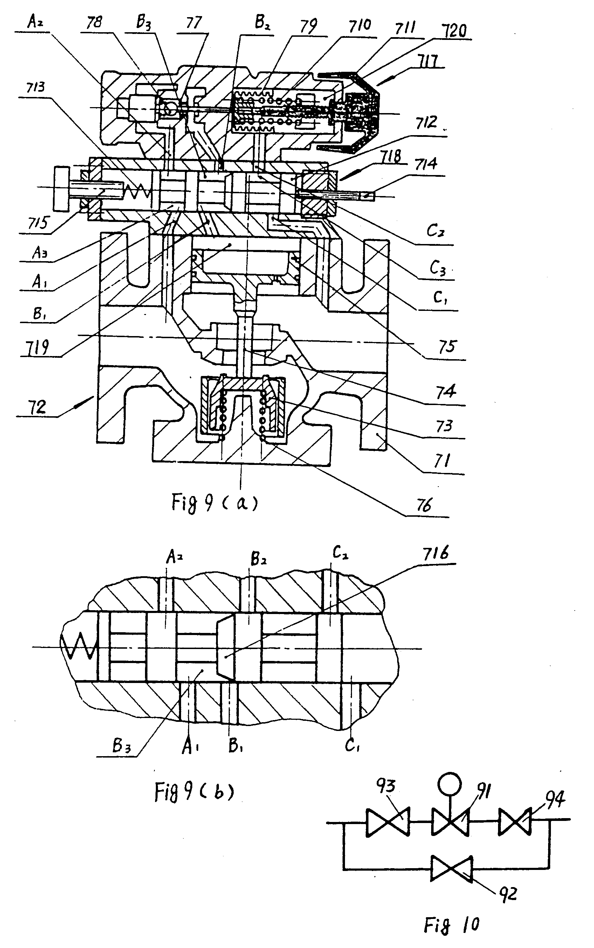

Various automatic control valves are extensively used in industry and may be classified as general purpose valve, hydropneumatic valve and instrument valve according to their field of usage. They can make use of various power sources including energy of medium itself for actuating to meet demands for pressure, flow and direction. However, there will be time of failure for any automatic valve and also time of abnormal operation due to change of external conditions. For example, an electric power cut-off, an overvoltage or undervoltage, a pipeline pressure being too high or too low, will cause magnetic valves out of order. For an automatic valve in the field of general purpose valve and instrument valve, the prior art for solving said problem is by mounting automatic control valve with by-pass isolation method. As shown in Figure 10, (91) is an automatic control valve, (92) is a by-pass manual valve, (93) and (94) are isolation manual valves, and such a pipeline can be controlled manually and repaired on-line when the automatic control valve is out of order. The so-called on-line repair is meant by a guarantee of the whole system to work uninterruptedly while the automatic control valve is opened or dismantled for repair. Apparently, it is at the expense of occupying more space and an increase of cost. In case of an automatic control valve in a hydropneumatic system where space is limited, such a method is generally not used and repair has to be done by shutdown in time of trouble.

The automatic control valves used in industry are mostly of pilot type which have the distinct advantage in using a smaller pilot valve to control a larger main valve, so as to decrease volume, reduce weight and lower consumption and costs. However, in case of this kind of pilot type automatic control valve failures come often from pilot valve side. In view of such an analysis, US Patent No. 4816083 "combined multifunction magnetic valve" discloses a new conception that two screws are used to isolate the pilot valve which renders an on-line repair possible and thus is well received in engineering circle. However, such a structure is not the simplest, and the manual operation is not yet convenient. And, said nice conception ought not to be limited in the field of magnetic valve.

On the other hand, existing pressure and flow automatic control valves in hydropneumatic system have built-in manual pressure adjusting valve, damping throttle valve and pressure compensating throttle valve which are disposed separately resulting in numerous parts, bulky volume and high cost and thus improvements are needed.

The present invention, in view of above-mentioned problems, puts forward a new conception for an automatic control valve with isolation function.

One purpose of the present invention lies in isolating the main valve for maintenance and in manual operating isolation valve to control main valve.

The second purpose of the present invention lies in that the pilot valve is to be isolated first which can then be dismantled for maintenance while the main valve can still be controlled maually or by automatic piloting with isolation valve.

The third purpose of the present invention lies in enabling isolation valve to have a throttling function by itself so as to be able to adjust parameters of actuating time and pressure of the main valve during automatic or manual control.

The fourth purpose of the present invention lies in simplifying and combining the structure of the manual pressure adjusting valve, damping throttle valve, pressure compensating throttle valve of the automatic control valve in an hydropneumatic system and bestowing it the function of an isolation pilot valve.

The fifth purpose of the present invention lies in providing an isolation valve with compactness in structure and case in operation.

In short, the present invention renders possible that the automatic control valve is still controllable under emergency condition, capable of on-line maintenance and with parameters adjustable, compact in structure, simply connectable to the pipeline and convenient in operation.

The present invention creates a magnetic overflow valve of compact structure with a damping throttle valve and a manual pressure adjusting valve.

The present invention is realized by means of the following technical schemes:
1. An isolation valve is disposed on the inlet and outlet passages of a main valve of the automatic control valve, or on a passage joining main valve and pilot valve.
2. The valve body of the isolation valve and the main valve are integrally formed with a round hole inside and with an isolation valve core to fit precisely to the round hole. Holes or slots are provided on the valve core in proper position, which can guarantee an unimpeded pass of the inlet and outlet of the main valve or that of the passage between the main valve and the pilot valve. Turning or moving the isolation valve core to change its position relative to the valve body will cut off the passage originally unimpededly open and insolate the main valve from the inlet and outlet or isolate the main valve from the pilot valve, thus will render possible to carry out an on-line maintenance for the main valve or the pilot valve.
3. Under the isolated condition mentioned above, turning and moving the isolation valve core can also place it in several different positions according to requirement, so that holes or slots on the valve core can keep inlet and and outlet in communicated state, or keep the passage of the main valve originally in connection with pilot valve partially or fully communicated, or totally closed. In other words, the isolation valve can still be used to control the action of the main valve during on-line maintenance of the main valve or pilot valve.
4. A slight deviation of the isolation valve core from the positions as mentioned above in schemes 2 and 3 will decrease the flowing area formed by holes or slots provided on the valve core with partial or entire passage of the valve body and will have the effect of throttling so as to acquire different control parameters.
5. Spiral shaped, T-shaped or L-shaped guide slots may be defined further on the isolation valve core and then the change of the valve core position is a combination mode of turning and moving.
6. A round hole may be defined in the center of the abovementioned isolation valve core to serve as the valve seat of a manual pressure adjusting pilot valve or as the valve seat of a check valve built-in in the automatic control valve proper.
7. The valve core of the above-mentioned isolation valve may be composed of a sleeve with holes or slots and an inner core sliding in the sleeve. Turning or moving the sleeve will effect in the same manner an action of isolation and change of a flow path and meanwhile holes of the sleeve and the inner core may form a throttling opening as well, or the sleeve will serve concurrently as the valve seat of a manual pressure adjusting valve or a check valve. In other words, the structure of an automatic control valve with built-in throttle valve, pressure adjusting valve or check valve can also be simplified.

According to above-mentioned technical schemes of the present invention, the structure of the manual pressure adjusting valve, damping throttle valve and pressure compensating throttle valve of the automatic control valve may be combined and simplified, even if the function of isolation is not considered.

It is evident from the above-mentioned technical schemes that the isolation valve according to the present invention provides the multiple functions of isolating, direction switching and throttling. Therefore, the advantage of the present invention is quite distinct. First of all, it provides the possibility of by-pass controllability and on-line maintenance of the automatic control valve, simplifies pipeline, facilitates operation and can meet emergency treatment under contingency. Moreover, it simplifies the structure of a part of the automatic control valve, up-grades their performance, can acquire different control parameters and lowers cost. Thirdly, the present invention belongs to a fundamentally important improvement on the prior art with a broad field of application and very distinct effect.

In order to explain the present invention clearly and specifically, embodiments of the present invention are further described in conjunction with the accompanying drawings.
Figures 1 (a) - 1 (e) are schematic diagrams of structure and isolation principle of the first embodiment of the present invention, i.e. of a two-position, two-way isolation automatic control valve;
Figures 2 (a) -2 (g) are schematic diagrams of structure and isolation principle of the second embodiment of the present invention, an isolation pilot type magnetic valve for use in the field of instrument valves;
Figures 3 (a) - 3 (d) are schematic diagrams of structure and isolation principle of the third embodiment of the present invention, an isolation pilot type magnetic overflow valve with the valve seat of a built-in manual pressure adjusting valve modified into a rotatable isolation valve;
Figures 4 (a) -4 (c) are schematic diagrams of structure and isolation principle of the fourth embodiment of the present invention, an isolation pilot type magnetic overflow valve comprising further a simplified new structure of a combination of a manual pressure adjusting valve with a damping throttle valve;
Figures 5 (a) -5 (n) are schematic diagrams of the structure and isolation principle of the fifth embodiment of the present invention, i.e. of an isolation pilot type magnetic overflow valve which can still be manually or automatically controlled under the condition that a magnetic switching valve and two remote pressure adjusting valves are out of order;
Figures 6 (a) - 6 (e) are schematic diagrams of the structure and isolation principle of the sixth embodiment of the present invention, i.e. of an isolation pilot type valve with a pressure compensating throttle valve and a manual pressure adjusting valve;
Figures 7 (a) - 7 (e) are schematic diagrams of the structure and the isolation principle of the seventh embodiment of the present invention, i.e. of an isolation unloading overflow valve wich isolates not the pilot valve but the main valve, and whose isolation valve core acts concurrently as a check valve seat too;
Figures 8 (a) -8 (g) are schematic diagrams of structure and isolation priciple of the eighth embodiment of the present invention, i.e. of an isolation electrohydraulic switching valve (change valve). The above six embodiments are all automatic control valves in the hydropneumatic field while the seventh and eighth embodiments show an improved new conception of a combined moving-turning type multiway switching valve;
Figures 9 (a) and 9 (b) are schematic diagrams of the structure and the isolation principle of the ninth embodiment of the present invention, i.e. of an isolation pilot type depressurization valve; and
Figure 10 is a schematic diagram of a pipeline with by-pass isolation in the field of traditional general purpose valve and instrument valve, which has been described above in paragraphs of invention background.

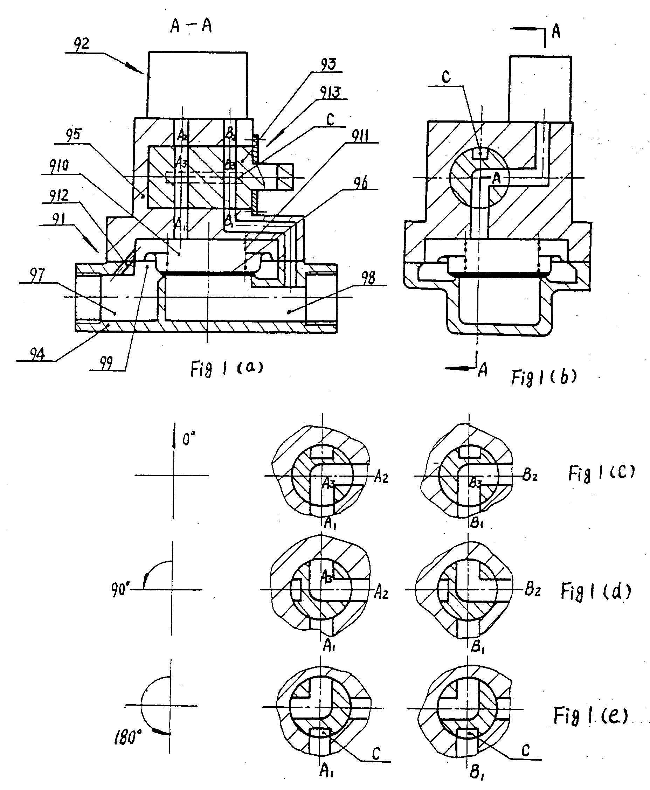

A description is made to each of the embodiments as follows:
Now referring to Figure 1, the first embodiment shown in Figure 1 is a two-position, two-way isolation automatic control valve. It consists of a main valve (91), a two-position, two-way pilot valve (92); and an isolation valve (93). The main valve is composed of a valve body (94), a valve cover (95) and a valve core (96); the valve core (96) separates a chamber formed by valve body (94) and valve cover (95) into two portions, one portion of which communicating with an inlet (97) of the main valve (91) is a main chamber (99) and the other is a back chamber (910) facing the valve cover (95). When the pressure in the main chamber (99) is less than or equal to the pressure in the back chamber (910), the valve core (96) under the action of a spring (911) is pressed to valve body (94) and the main valve is closed. When pressure in main chamber (99) is higher than the sum of pressure in back chamber (910) and the force of the elastic spring (911), the valve core (96) is pushed away from valve body (94), the main valve opens and medium flows from an inlet (97) to an outlet (98). Between the main chamber (99) and the back chamber (910) there is an equalizing hole (912). Between the back chamber (910) and the outlet (98) there are passages A₁ A₂, B₁ B₂ which are controlled by the pilot valve (92) for opening and closing, and the area of passages A₁ A₂ and B₁ B₂ is larger than the area of the equalizing hole (912). When pilot valve (92) opens, liquid in the back chamber (910) flows from passages A₁ A₂ and B₁ B₂ to the outlet (98), the back chamber (910) depressurizes and the main valve (91) opens. When the pilot valve (92) closes, passages A₂ and B₂ do not communicate with each other, the back chamber (910) pressurizes through equalizing hole (912) and the main valve (91) closes. In the present invention an isolation valve core (93) is disposed on the passages A₁ A₂ and B₁ B₂ between the main valve (91) and pilot valve (92), whose cylindrical or conical surface is fitted to a hole on the valve cover (95). When isolation valve core (93) is situated at a position as shown in Figure 1 (c), the two holes A₃, B₃ on isolation valve core (93) will be in communication with passages A₁ A₂ and B₁ B₂ respectively, and then the pilot valve (92) is under normal working state, when pilot valve (92) is out of order or ambient condition can not conform to the characterisitic parameters of valve, the isolation valve core (93) can be turned to a position as shown in Figure 1 (d), then the pilot valve core (93) will cut off passages A₁ A₂ and B₁ B₂. If the isolation valve core (93) is further turned to a position as shown in Figure 1 (e), passages A₁ and B₁ can be again in communication state through a radial slot C on the isolation valve core (93). When isolation valve core (93) conducts a switching between two positions as shown in Figures 1 (d) and 1 (e), passages A₂ B₂ are always blocked. In other words, the pilot valve (92) can be opened or dismantled for repair, while the action of main valve (91) can still be controlled in operation with the isolation valve (93), namely, to effect on-line maintenance.

It is also possible to deviate slightly the isolation valve core (93) away from positions shown in Figure 1 (c) or Figure 1 (e) to regulate the passage sectional area between the back chamber (910) of the main valve (91) and outlet (98), so as to effect a regulation of the opening time to the main valve (91) through throttling.

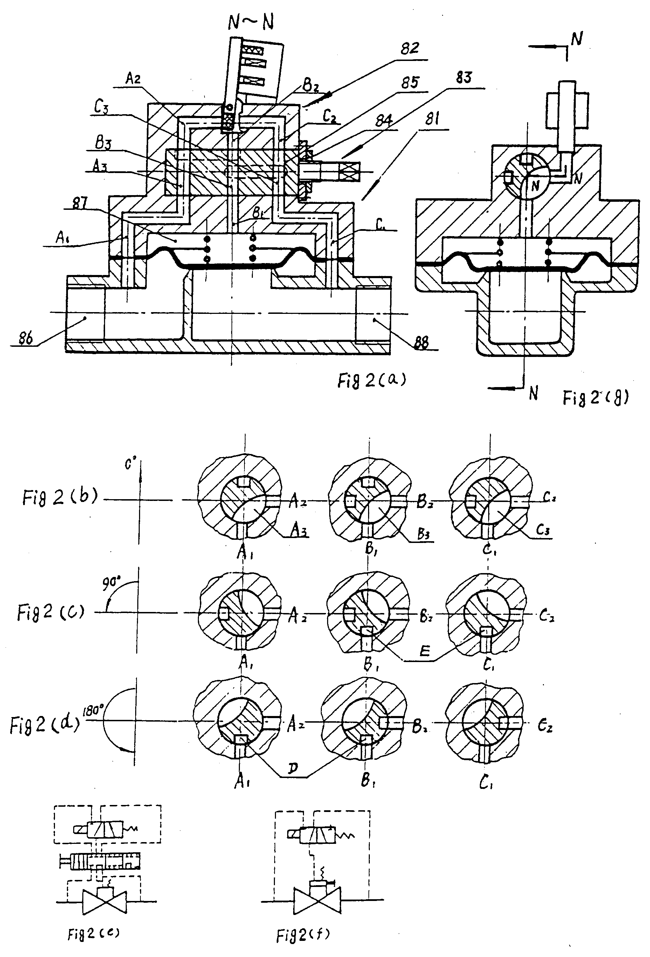

The second embodiment shown in Figure 2 is an isolation pilot type magnetic valve in the field of instrument valve. It consists of a main valve (81), a two-position, three-way pilot valve (82) and an isolation valve (83). There are three passages A₁ A₂, B₁ B₂, C₁ C₂ between the main valve (81) and pilot valve (82). On the main valve (81) side, passage A₁ is in communication with an inlet (86) of the main valve (81). Passage B₁ is in communication with a back chamber (87) of main valve (81), and passage C₁ is in communication with an outlet (88); on the pilot valve (82) side, the passage A₂ is in communication with an inlet of pilot valve (82), the passage B₂ is in communication with an intermediate chamber of pilot valve (82), and the passage C₂ is in communication with an outlet of pilot valve (82). The isolation valve core (85) is a cylinder having three curved slots A₃, B₃, C₃ and two axial slots D and E. At normal position, the three curved slots A₃, B₃ and C₃ are in communication with passages A₁ A₂, B₁ B₂ and C₁ C₂, respectively, and the magnetic valve works normally. See Figures 2 (a), 2 (b) and 2 (g).

When the pilot valve (82) is out of order, the isolation valve core (85) can be turned to a position shown in Figure 2 (c) or Figure 2 (d), then passages A₂, B₂ and C₂ are closed, the pilot valve (82) is isolated and can be dismounted for repair. In Figure 2 (c), the axial slot E on the isolation valve core (85) connects passages B₁ with C₁ with each other and then the main valve (81) opens: while in Figure 2 (d), axial slot D on isolation valve core (85) connects passages A₁ with B₁ with each other and then the main valve (81) closes. Apparently the isolation valve core (85) can still be turned by hand to control the action of the main valve (81) after the pilot valve (82) has been dismantled.

The three curved slots A₃, B₃, and C₃ of the isolation valve core (85) are not entirely identical, i.e. the slot B₃ is the widest, the slot A₃ is shorter at its right side, and the slot C₃ is shorter at its left side. When the magnetic valve works at its normal position, the three slots A₃, B₃ and C₃ do not block passages A₁ A₂, B₁ B₂ and C₁ C₂, while a slight turning of isolation valve core (85) relative to the normal position will partially block passage A₁, but passage C₁ C₂ will not be blocked, or passage A₁ A₂ will not be blocked but passage C₂ are partially blocked, such that a throttling action is provided and the time to open or close the magnetic valve can be regulated. Similarly, during manual operation of isolation the valve (83), axial slots D and E can partially block the flowing passage so as to control actuating time. In order to obtain a relatively stable time parameter, a lock nut (84) can be added outside the isolation valve core (85).

Figure 2(e) is a schematic diagram of graphic symbols to show its working principle. Figure 2(f) is a schematic diagram of its simplified symbols.

Apparently, the pilot type magnetic-valve of this embodiment may adopt holding type or adopt two pilot valves which will accomplish an action switching upon energization. And, pilot valve is not limited to magnet valve but a constant pressure pilot valve and a constant temperature pilot valve can also be used; the mode of control is not limited to internal control because external control is also possible, i.e. utilizing external pressure, temperature and signal to control action of the main valve.

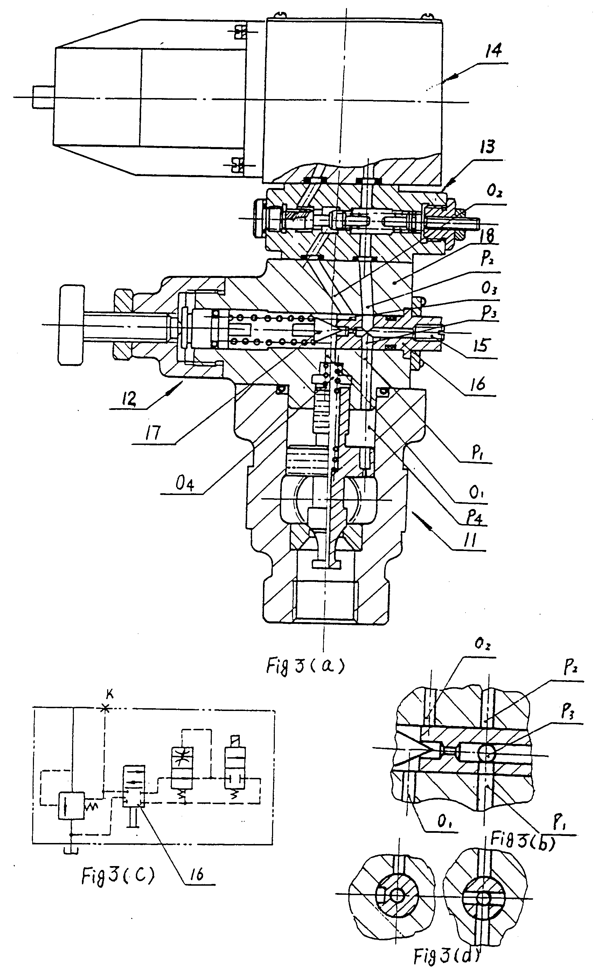

The third embodiment shown in Figure 3 is an isolation pilot type magnetic overflow valve in the hydropneumatic field. It consists of a main valve (11), a manual pressure adjusting valve (12), a damping throttle valve (13) and a magnetic pilot valve (14). Between main valve (11) and magnetic pilot valve (14), there are two passages P₁, P₂, O₁, O₂, wherein passage P₁ is in connection with a piston upper chamber P₄ of the main valve (11), passage O₁ is in connection with oil drain chamber O₄, passage P₂ is in connection with an inlet of magnetic pilot valve (14), and passage O₂ is in connection with an outlet of magnetic pilot valve (14). After the energization of the magnetic pilot valve (14), a hole P₃ and a slot O₃ of a valve seat (16) of the manual pressure adjusting valve (12) also communicates with these two passages P₁ P₂, O₁ O₂, and oil liquid in upper chamber P₄ of the main valve (11) flows to oil the drain chamber O₄ through magnetic pilot valve (14) and the main valve (11) then begins to drain. When current is cut-off in magnetic pilot valve (14), the abovementioned two passages P₁ P₂, O₁ O₂ are blocked and the main valve (11) is blocked as well. The manual pressure adjusting valve (12) effects the function of limiting the maximum pressure; when hydraulic pressure of oil exceeds the set value, oil in upper chamber P₄ of the main valve (11) will push open a conical lifting valve core (17) of the manual pressure adjusting valve (12) to flow into the oil drain chamber O₄, and then the main valve (11) drains as well. Since magnetic overflow valve belongs to magnetic automatic control valve, the manual pressure adjusting valve (12) is here regarded as a part of the main valve (11). The effect of damping the throttle valve (13) lies in lengthening the unloading time and diminishing noise. The structure principle of this valve is well known to technicians in this field and a detailed description is unnecessary. This embodiment differs from the prior art merely in the valve seat (16) of the manual pressure adjusting valve (12), which is not only precisely fitted in valve body (18) but is also rotatable so as to act as an isolation valve core concurrently. When it is in its normal position, the holes and slots thereon are in communication with passages P₁ P₂ and O₁ O₂, as shown in Figure 3 (a), and the isolation magnetic overflow valve works normally. When the magnetic pilot valve (14) or damping throttle valve (13) is out of order, the valve seat (16) can be rotated to block passage P₂ and O₂, as shown in Figure 3 (d), then the magnetic pilot valve (14), and the damping throttle valve (13) can be opened or dismantled for repair, while the main valve (11) can still pilot-control overflow by the manual pressure adjusting valve (12). A spot on the valve seat (16) stopped up by a plug (15) is an external control port which can be used to control overflow externally.

Figure 3 (c) is a simplified graphic symbol diagram to show its principle, wherein reference number (16) is an isolation valve.

The isolation pilot magnetic overflow valve of this embodiment needs not any additional parts but only a slight modification of the valve seat (16) of the manual pressure adjusting valve so as to effect the function of the isolation pilot valve (14) and to achieve on-line maintenance of the magnetic pilot valve and damping throttle valve with distinct advantage.

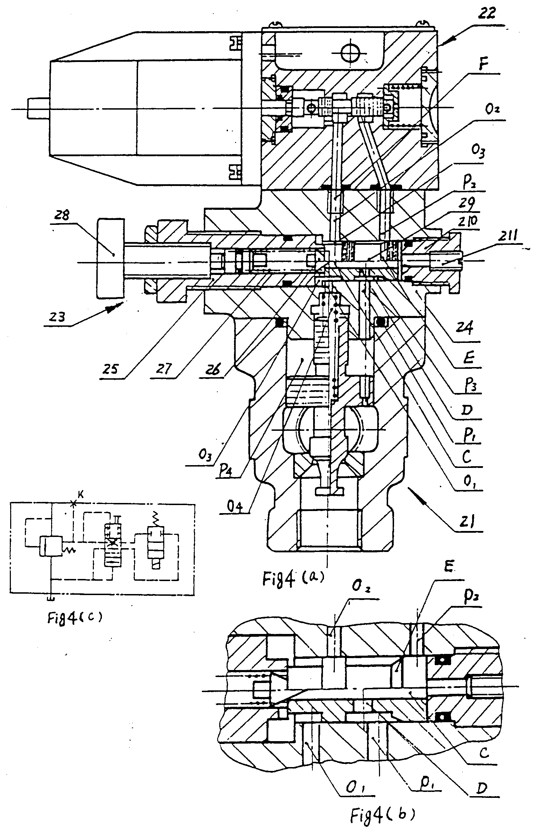

The fourth embodiment shown in Figure 4 is an isolation magnetic overflow valve with improvements made on the third embodiment. Its valve seat of the manual pressure adjusting valve functions concurrently as a sliding throttle valve core to eliminate the whole damping throttle valve, and its structure is shown in Figure 4 (a). The magnetic overflow valve shown in this embodiment consists of a main valve (21), a magnetic pilot valve (22) and an isolation pressure adjusting valve (23) joined to the main valve (21). The structures of the main valve (21) and the magnetic pilot valve (22) are the same as in prior art, with the two passages P₁ P₂ and O₁ O₂ communicating in-between, the passage P₁ being in connection with a piston upper chamber P₄ of the main valve (21), and passage O₁ being in connection with an oil drain chamber or an oil drain outlet O₄ of the main valve 21. Passages P₂, O₂ are in connection with the inlet and outlet of the magnetic pilot valve (22). The isolation pressure adjusting throttle valve (23) consists mainly of a valve body (24), a valve cover (25), a pressure adjusting conical lifting valve core (26), a compression spring (27), a pressure adjusting rod (28), a throttle valve core (29) slidable in the valve body (24), a limit screw tube (210) and a plug (211). An annular slot P₃ is defined on the middle of the outer circumference of the throttle valve core (29), which is smaller in periphery near valve cover (25) side to form an annular chamber O₃. Annular slot P₃ and annular chamber O₃ are in communication with passages P₁ P₂ and O₁ O₂ in the normal position, and the main valve (21) overflows under the control of the magnetic pilot valve (22). The throttle valve core (29) is holow, having an axial hole C and a radial hole D at the annular slot P₃ section; the conical valve core (26) is pressed towards the hole opening of the throttle valve core (29) under the force of the compression spring (27), and the maximum pressure of the isolation magnetic overflow valve is adjusted by the pressure adjusting rod (28). There is further a conical shoulder E at the right side of the annular slot P₃ of the throttle valve core (29) to form a throttle port with the passage P₂ of the valve body (24). Usually, high pressure oil enters into the right end of the throttle valve core (29) from the passage P₁ through the annular slot P₃ and the holes D and C to push the throttle valve core (29) leftward until it gets in contact with the end face of valve cover (25) protruding into the valve body (24). The magnetic pilot valve (22) is opened to guide the main valve (21) to overflow, the hydraulic pressure at the end of passage P₁ is lowered gradually to the pressure in the oil drain chamber O₄ of the passage O₁ due to the action of the throttle port to effect a damping function. The speed of unloading time is determined by adjusting the position of valve the cover (25). When the throttle valve core (29) moves, the conical valve core (26) is all the time pressed on throttle valve core (29) due to the action of the compression spring (27). When the valve cover (25) is adjusted, the compression spring remains (27) unchanged in position relative to the valve cover (25), hence it only adjusts the damping unloading time. In order to change the maximum overflow pressure, the adjusting rod (28) is to be turned.

When the magnetic pilot valve (22) is out of order, the valve cover (25) can be retracted, and the limit screw tube (210) can be turned to push the throttle valve core (29) leftward up to the block passages P₂ and O₂ as shown in Figure 4 (b) and then the magnetic pilot valve (22) is isolated and a maintenance can be carried out. Then the main valve (21) overflows under the piloting control of the conical valve core (26). The plug (211) is the spot of the external control port which can be used to control the overflow externally.

Figure 4 (c) is a simplified graphic symbol diagram to show its working principle.

It is thus evident from the above description that this embodiment puts forward a simple new structure for an isolation magnetic overflow valve with a damping throttle valve and a manual pressure adjusting valve, therein the valve seat of the manual pressure adjusting valve acts concurrently as throttle valve core, thereby the whole throttle valve is eliminated so as to realise a compact structure and low cost and provides a solution of the problem of isolating the magnetic pilot valve.

Apparently, the isolation pressure adjusting throttle valve can be also combined in the proportion overflow valve and other automatic control valves.

It is also evident from Figure 4 (a) that the screw thread F can be defined in the hole opening of passages P₂ and O₂ joining the isolation throttle pressure adjusting valve (23) and the magnetic pilot valve (22) for mounting stand-by screws to prevent oil from leaking after dismantling of the magnetic pilot valve (22).

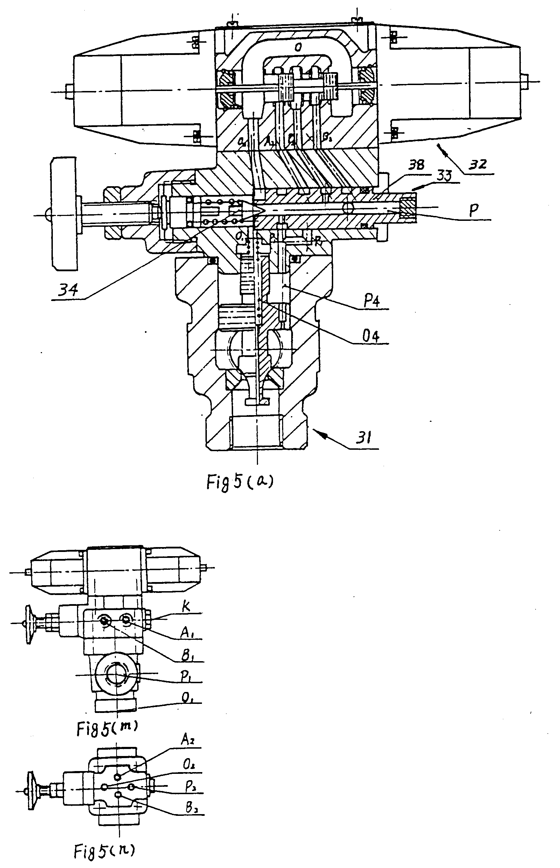

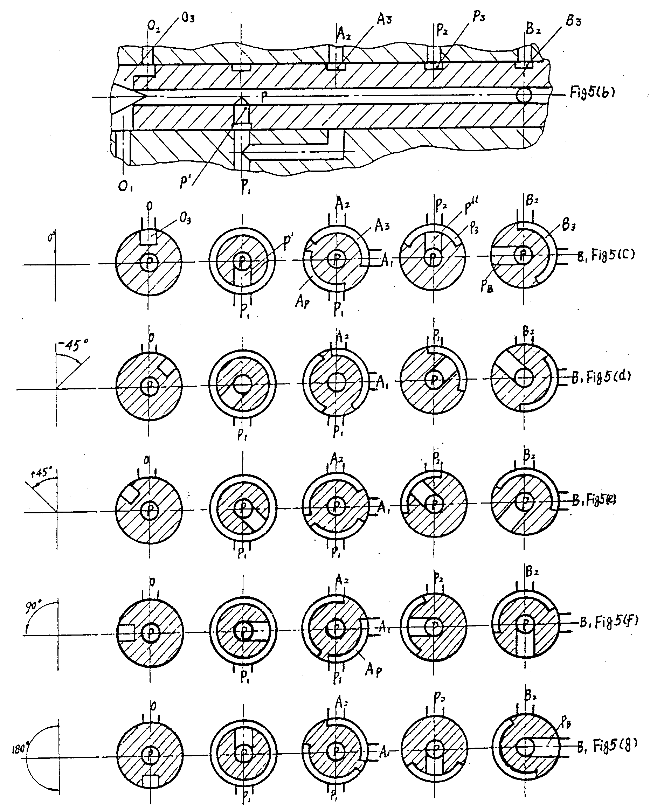

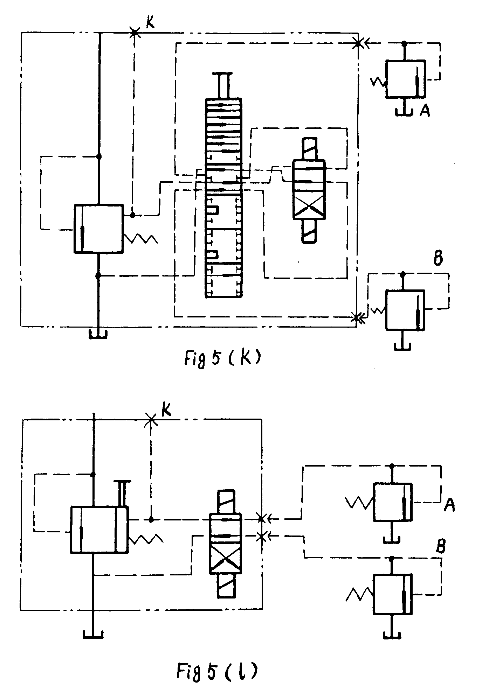

The fifth embodiment shown in Figure 5 is also an isolation magnetic overflow valve. It is a further development on the basis of the third embodiment in which the manual pressure adjusting valve seat has been modified to be rotatable and to be used as an isolation valve core concurrently. It also comprises a main valve (31) (main valve with manual pressure adjusting valve), a pilot valve (32) and an isolation valve (33). It differs from the two foregoing embodiments in that the pilot valve (32) is a two-position, four-way magnetic switching valve, and there are further two remote pressure adjusting valves A and B (see Figures 5 (k) and 5 (l)). It is hoped that when these pilot valves (32), A and B are damaged separately or entirely, it is still possible to control the overflow of the main valve (31) automatically or manually during repair.

As shown in Figure 5(a), there are four passages P₁ P₂, A₁ A₂, B₁ B₂ and O₁ O₂ between the main valve (31) and the pilot valve (32). The passage P₁ and O₁ are in connection with a piston upper chamber P₄ and an oil drain chamber O₄, respectively, and the passages A₁, B₁ are in connection with two remote pressure adjusting valves A and B. The passages P₂, A₂, B₂ and O₂ are connected to corresponding chambers of magnetic switching valves (32), respectively. There is a hole P on the central axis of an isolation valve core (38), and a manual pressure adjusting conical lifting valve core (34) is pressed tightly by spring on the left end hole opening of the isolation valve core (38). There are three curved slots P₃, A₃, and B₃ and a notch O₃ (See Figure 5 (b) defined on the outer surface of the isolation valve core (38). At the normal position, as shown in Figures 5 (b) and 5 (c), slots A₃ and B₃, and notch O₃ are connected to passages A₁ A₂, B₁ B₂, and O₁ O₂, passages P₁ and P₂ are, by means of the central hole P, in communication with two radial holes P'and P'', and the isolation magnetic overflow valve works normally.

Figure 5(m) is a side view and figure 5(n) is a plan view after in case of the pilot valve (32) being dismantled, Figures 5(k) and 5(l) are respective schematic diagrams of hydraulic graphic symbols and simplified symbols.

When the remote pressure adjusting valve B is out of order, the isolation valve (33) can be turned to a position as shown in Figure 5(d), then the passage B₂ is isolated and the repair work can be carried out for the pressure adjusting valve B. The main valve (31) works under a piloting control of the pressure adjusting valve A and the manual adjusting valve and of course, the pressure of manual adjusting valve can be set to the original value of the pressure adjusting valve B. Similarly, when pressure adjusting valve A is out of order, the isolation valve can be turned to a position as shown in Figure 5(e) and the pressure adjusting valve A is isolated.

And when magnetic switching valve (32) is out of order, the isolation valve core (38) can be turned by hand to effect overflow under the control of the pressure adjusting valves A and B. At a position shown in Figure 5(f), the curved slot A_{P} will keep the passages P₁ A₁ communicated with each other and the pressure adjusting valve A will be functioning. At a position as shown in Figure 5(g), a radial hole P_{B} will link up the passages P₁ and B₁ through the hole P, and the pressure adjusting velve B will be functioning. Under these two conditions, passages P₂, A₂, B₂ and O₂ are all isolated from passage P₁, therefore the magnetic switching valve (32) can be repaired on-line.

According to method shown in this embodiment, it is fully possible to design an isolation valve core to match a threeposition, four-way magnetic switching valve, and with a slight modification of the holes and the slots thereon to achieve function similar to O type and H type sliding valves with the aim that the main valve (31) will be made unloading and loading in the median of manual control.

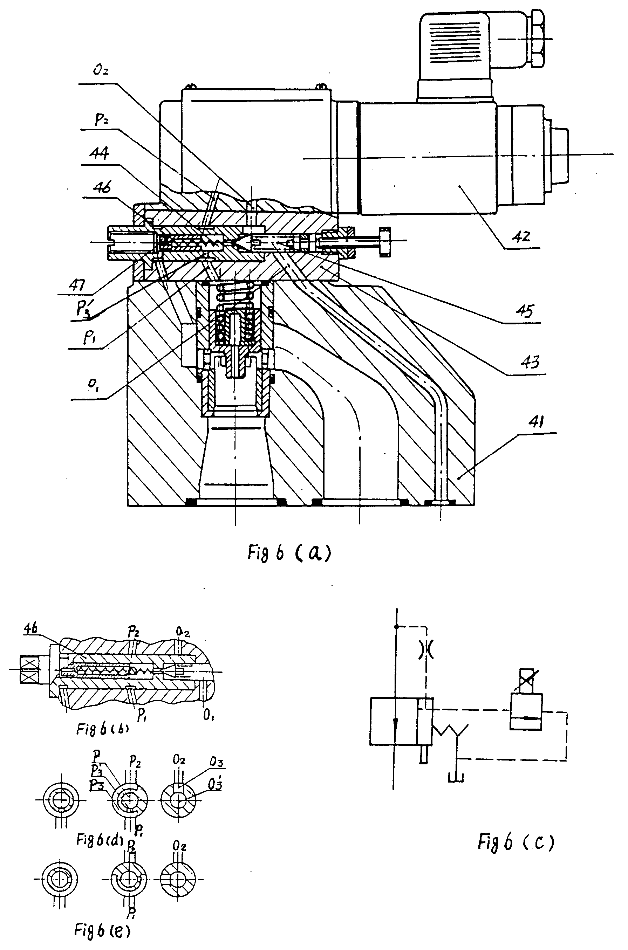

The sixth embodiment shown in Figure 6 is a proportion depressurization valve having isolation function and a pressure compensating throttle valve and and a manual pressure adjusting valve. It consists of a main valve (41), a proportion pilot valve (42) and an isolation throttle pressure adjusting valve (43), in which the isolation throttle pressure adjusting valve (43) is composed of a pressure compensating isolation throttle valve (44) and a manual pressure adjusting valve (45). It differs from the prior art only in that a valve sleeve (46) of the throttle valve (44) is rotatable, longer and provided with some holes or slots distributed thereon. As shown in figure 6(a) and 6(d), at a normal position, holes P₁ P₃ and P'₃, O₃ and O'₃ on valve sleeve (45) enable the main valve (41) to communicate with passages P₁ P₂ and O₁ O₂ of the proportion pilot valve (42) and the proportion depressurization valve works normally. An increase of pressure at an inlet end will push the core (47) in the valve sleeve (46) of the throttle valve (44) rightwards and its end face and hole P'₃ of the valve sleeve (46) form a throttle port which will effect the function of an automatic compensation. When the proportion pilot valve (42) is out of order, the valve sleeve (46) can be turned to a position as shown in Figure 6 (b), then the holes P₂ and O₂ are blocked and the proportion pilot valve (42) is isolated. Hydraulic oil at the inlet side of the main valve (41) can still enter into the back chamber (41) of the main valve (41) through a throttle valve (44) and depressurizes automatically under control of the manual pressure adjusting valve (45). In other words, when the proportion pilot valve (42) is out of order, manual adjusting of the pressure adjusting valve (45) will enable the main valve (41) to output a set value pressure and meanwhile to retain the function of the automatic compensation for the inlet pressure fluctuation.

Apparently, this kind of isolation throttle valve (44) with the valve sleeve (46) can be combined in other automatic control valves.

Figures 6(d) and 6(e) are partial sectional views of holes of an isolation throttle valve.

Figure 6(c) is its simplified graphic symbol diagram.

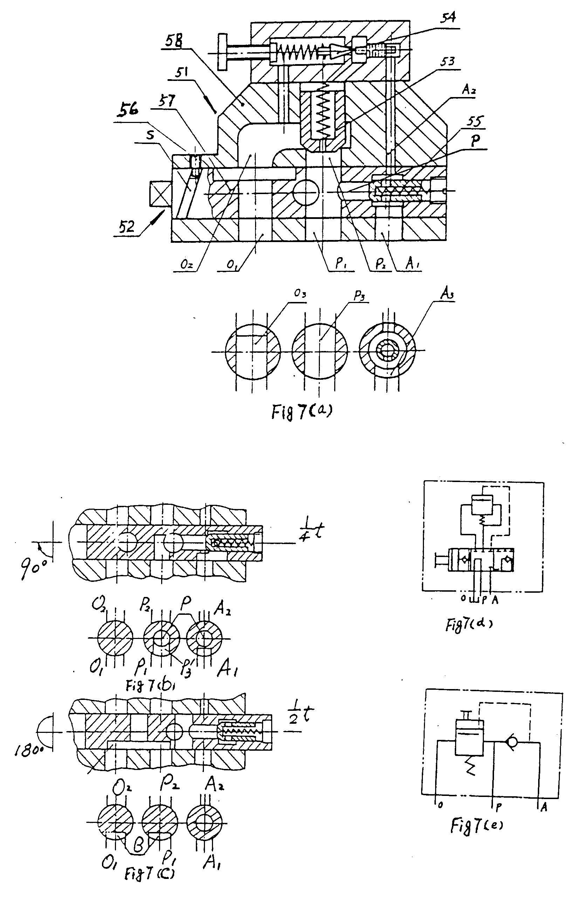

The seventh embodiment shown in Figure 7 is an isolation unloading valve in hydropneumatic field. Figure 7(a) is its simplified structure diagram. It consists of a common unloading overflow valve (51) and an isolation valve (52), and the unloading overflow valve in turn consists of a main valve (53), a pilot valve (54) and a check velve (55). The isolation valve (52) is mounted to the inlet passages P₁ P₂ and the oil drain passages O₁ O₂ and working passages A₁ A₂, P₁, O₁ and A₁ are oil inlets, oil overflow ports and working ports, respectively. Three radial holes P₃, O₃ and A₃ on the isolation valve core are in connection with above-mentioned passages P₁ P₂, O₁ O₂ and A₁ A₂. There is still an axial hole P and a check valve seat on an isolation valve seat (57), the check valve (55) slides in its hole, and the unloading overflow valve (51) works normally.

When the main valve (53) or the pilot valve (54) is out of order, the isolation valve core (57) may be turned for 90°, as shown in Figure 7 (b), the passages P₂, O₂ and A₂ will be blocked and the main valve (53) will be isolated, while the oil in oil inlet P₁ will flow to the working port A₁ through the radial hole P₃ at 90° with P'₃ and the axial hole P, and through the check valve (55). Since there is a spiral slot S on the isolation valve core (57), and there is further a limit element (56) on valve body (58), it also moves axially during turning. After the isolation valve core (57) is turned for 90°, as shown in Figure 7(c), the passages P₂, A₂ and O₂ are still blocked while the oil inlet P, and the oil drain O₁ are unloading through the axial slot B of the isolation valve core (57).

This embodiment differs from other embodiments in that the isolation valve (52) does not isolate the pilot valve (54) but the main valve (53). The isolation valve core (57) does not only turn but also moves during the change of the position.

Figure 7(d) is a schematic diagram of its graphic symbols and Figure 7(e) is a schematic diagram of its simplified symbols.

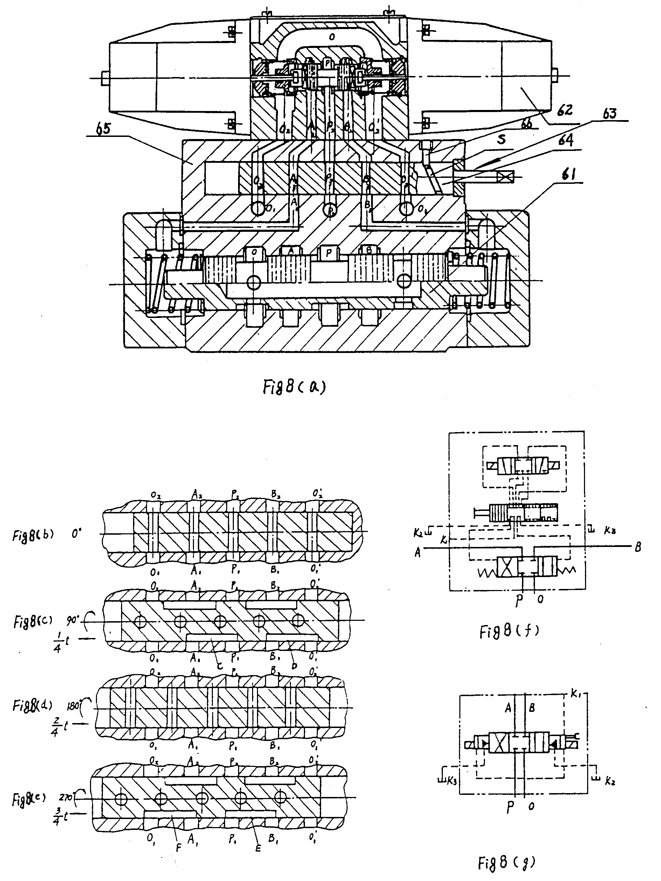

The eighth embodiment shown in Figure 8 is an electrohydraulic switching valve. It consists of a main valve (61), i.e. a three-position, five-way hydraulic switching valve, a pilot valve (62) and an isolation valve (63). In comparison with prior art, only an isolation valve of simple structure is added.

The isolation valve core (64) is a cylinder precisely located in a valve body (65) on which there are five holes P₃, A₃, B₃, O₃ and O₃ with their normal positions as shown in Figure 8 (a). They will keep five passages P₁ P₂, A₁ A₂, B₁ B₂, O₁ O₂ and O'₁ O'₂ communicated between the main valve (61) and the pilot valve (62), and the electrohydraulic switching valve works normally. Figure 8(b) is an enlarged partial view of the isolation valve. When the pilot valve (62) is out of order, the isolation valve core (64) may be turned for 90° as shown in Figure 8 (c), the abovementioned five passages P₁ P₂, A₁ A₂, B₁ B₂, O₁ O₂ and O'₁, O'₂ are shut off, while other two axial slots C and D of the isolation valve core (64) will communicate passages P₁ with A₁, B₁ with O'₁, thus the main valve (61) moves to one side. If the isolation valve core (64) is turned for 270° relative to the normal position, as shown in Figure 8 (e), then axial slots E and F on the other side of the isolation valve core (64) will communicate passage P₁ with B₁, A₁ with O₁, and then the main valve moves to the other side. In other words, when the pilot valve (62) is out of order, manual operation of the isolation valve (63) can also realize the switching function.

In this embodiment, a piloting spiral slot S is defined on the isolation valve core (64) and there is a limit element (66) on the valve body (65); the isolation valve core (64) can also move along axial direction while turning, as shown in Figure 8(d) (turning for 180°). Holes on the isolation valve core (64) are displaced in position with respect to holes on the valve body (65) so that hydraulic oil will not overflow. Then the controlling oil at both sides of the main valve (61) stops to flow, and the main valve (61) also stops moving. Of course, the T-shaped and L-shaped slots can be used to replace spiral slot (not shown in figure), in this case the manual operation will need motion of pushing, pulling and turning.

The isolation valve (63) can also work as a throttling element during normal working and a slight deviation of the isolation valve core (64) relative to its normal position will displace the holes of the isolation valve core (64) with respect to the holes of valve body (65) and effect a throttling function. Similarly, it can be done as such during manual operation. Upon utilizing the isolation valve (63), the original throttle valve can be eliminated.

Figure 8(f) is a schematic diagram of the hydraulic graphic symbols to show its working principle. Figure 8(g) is a schematic diagram of its simplified symbols.

The structure principle of the isolation valve (63) shown in this embodiment is applicable also to proportion direction and flow combination valve, servo valve, and is even more necessary. The reason is: Although the isolation valve can not effect a proportion control and servo control during manual operation, however, the proportion valve and the servo valve are very expensive, require strict ambient condition, and are subject to trouble easily, while the isolation valve is simple in structure, cheep and able to eliminate the throttle valve. Hence it is advantageous to use an isolation valve as it will add very little to total cost, give convenience to maintenance and emergency handling. Of course, it is suitable only in occasions where switching is not very frequent.

It is possible to design various isolation valve cores according to different median positions.

It is evident from the above description that the seventh and eighth embodiments also improve a kind of turning-moving type multichannel switching plunger valve. There are a number of channel openings on its body with holes or slots of the plunger valve core which form channels, and guide slots which may be of spiral shape, T-shape or L-shape. Turning and moving the valve core can change on- and off-state of a number of channel openings simultaneously.

The ninth embodiment shown in Figure 9 is a depressurization valve in the field of general purpose valves. It consists of three main portions: a main valve (72), a pilot valve (717) and an isolation valve (718). The main valve (72) consists of mainly a valve body (71), a valve clack (73), a valve stem (72), a piston (75) and a main spring (76). The pilot valve (717) consists of a pilot valve seat (77), a pilot valve clack (78), a corrugated tube (79), an adjusting spring (710) and an adjusting handle (711). The isolation valve (718) is a sliding valve which consists of an isolation valve core (712), an isolation spring (713), a push rod (714), and an adjusting screw rod (715). There are three passages A₁ A₂, B₁ B₂, and C₁ C₂ between the main valve (72) and the pilot valve (717); the passage A₁ is connected to the inlet of the main valve (72); the passage A₂ is connected to the inlet of the pilot valve (717); the passage B₁ is connected to an upper piston chamber (719); the passage B₂ is connected to the outlet of the pilot valve (717); the passsage C₁ is connected to the outlet of the main valve (72); the passage C₂ is connected to a corrugated tube chamber (720). There are three annular slots A₃, B₃ and C₃ of the isolation valve core (712) which are connected normally to the three passages A₁ A₂, B₁ B₂ and C₁ c₂, respectively, as shown in Figure 9(a) and the depressurization valve acts normally while its action principle is the same as prior art and further description is unnecessary.

When pilot valve (717) is out of order, the push rod (714) is turned to press the isolation valve core (712) to move leftward, as shown in Figure 9 (b); the cylindrical surface of the isolation valve core (712) will block the openings of passages A₂, B₂ and C₂ and will thus isolate the pilot valve (117) so that on-line repair can be carried out; at this point, the passage A₁ connecting inlet of the main valve (72) and the passage B₁ connecting the piston upper chamber (719) can be communicated by annular slots B₃ of the isolation valve core (712), and, the isolation valve core (712) has a conical surface (716) at the right side of the annular slot B₃ to form a throttle port with the passage B₁. The passage C₁ in connection with the outlet of main valve (72) is located outside of the end face of the isolation valve core (712). In this way, the working medium of the outlet end can enter the right end of the isolation valve core (712), the output pressure and force of the isolation spring (712) will determine the axial position of the isolation valve core (712) and thus adjust the flow of working medium from the inlet of the main valve (72) to the piston upper chamber (719) due to the acticn of throttling port. Hence the pressure fluctuation of the outlet will induce an up-and-down movement of the piston to automatically adjust and maintain the stability of outlet pressure; and turning the adjusting screw rod (715) to adjust a preset compression of the isolation spring (713) will then set the value of the outlet pressure. It is evident from the above analysis that the isolation valve (718) of said embodiment not only guarantees the action of the main valve (72) during normal operation of the pilot valve (717), but also can isolate the pilot valve (717), so that the pilot valve (717) can be dismatled for repair and the isolation valve (718) itself can serve as a stand-by pilot valve. The conical surface on the isolation valve core (712) may be machined into slots of other shape so long as the throttling action may be provided.

As the isolation valve of this embodiment is a sliding valve type and is hoped to be automatically controlled, therefore there will be a slight leakage when being used as a stand by pilot valve. For valves demanding very high hermetization, screw thread may be machined in the opening of the passages A₂, B₂ and C₂ and screw plugs (not shown in figure) may be used to seal tightly after the pilot valve (717) is dismantled.

It is evident from the description of the above nine embodiments that an automatic control valve will possess functions of isolation, switching and throttling with the addition of one isolation valve of very simple structure. Sometimes it will act concurrently as pressure adjusting valve seat, check valve seat and throttle valve sleeve so that when the automatic control valve or its pilot valve is out of order, it can still be controlled automatically or manually and on-line repair is rendered possible as well. Its advantage is very distinct. The types of the positional change of the isolation valve core may be the moving type, turning type and moving-turning combination type, and its structure may be single core type and sleeved type. In each embodiment, quite a few are interchangeable. Since the present invention is a fundamental improvement, it is applicable to many kinds of automatic control valve, and it is too numerous to mention one by one.

The moving-turning combination type multiway switching valve according to the present invention is an independent valve the use of which is not limited as an isolation valve but will find its application in many piping systems requiring multiway switching.

## Claims

1. An isolation automatic control valve comprising an automatic control valve, characterized in that it comprises further an isolation valve, said isolation valve being disposed at the inlet and outlet passage of said automatic control valve; said isolation valve having a valve core, the outer circumference of said valve core being precisely fitted to a bore defined on the valve body of said automatic control valve and provided with holes or slots on it; these holes or slots can keep the inlet and outlet passages of said automatic control valve in a communicated state when said automatic control valve is in normal operation and can cut off the above-mentioned passages when a relative motion occurs between said valve core and said valve body.

2. An isolation automatic control valve comprising an automatic main valve and a pilot valve, characterized in that it comprises further an isolation valve, said isolation valve being disposed at a passage connecting said main valve end pilot valve; said isolation valve comprises further a valve body and a valve core, said valve body being formed integrally with said main valve, the circumference of said valve core being precisely fitted to a bore of said valve body having holes or slots on it; these holes or slots, in case of normal operation of said automatic control valve, can keep said passage connecting said main valve to pilot valve in a communicated state, and can cut off said passage when a relative motion occurs between said valve core and said valve body.

3. An isolation automatic control valve according to claim 2, characterized in that said isolation valve core, when in a position to cut off the passage connecting said main valve with the pilot valve, is provided with holes or slots on said isolation valve core to keep the outlet part or the port at the main valve side joining to the pilot valve partially or fully incommunicated state.

4. An isolation automatic control valve according to claim 3, characterized in that said isolation valve is a movable slide valve with annular slots on its valve core, or further with an oblique surface or a shoulder of other shape to form a throttling port with holes or slots on valve body.

5. An isolation automatic control valve according to claim 3, characterized in that said isolation valve is a rotary valve, and the suface of said isolation valve core comprises axial holes or slots and arc-shaped or bow-shaped slots along circumferential direction or radial holes.

6. An isolation automatic control valve according to claim 3, characterized in that the isolation valve core carries out a combined moving and turning motion and is provided with guide slots of spiral shape, T-shape, or L-shape on its surface; and further a limit element to match with these slots on said valve body is provided.

7. An isolation automatic control valve according to claim 4, characterized in that said isolation valve core is mounted to a spring on its one end, or there is further an adjusting part capable of adjusting the initial compression of the spring.

8. An isolation automatic control valve according to claim 5 or 7, characterized in that said isolation valve core has a hole in its axial center, and with a lifting valve core pressed tightly by a spring to the hole end, or further with an adjusting part capable of adjusting the initial compression of said spring.

9. An isolation automatic control valve according to claim 8, characterized in that outside said lifting valve core there is a valve cover capable of adjusting the axial position and being in contact with said isolation valve core; and there is futher a pushing rod on the other side capable of moving said isolation valve core.

10. An isolation automatic control valve according to claim 5, characterized in that said isolation valve core comprises a sleeve with holes or slots on it and comprises a core sliding in the sleeve and forming a throttling port with the holes or slots of the sleeve.
